(19) Europäisches Patentamt
European Patent Office
Office européen des brevets

(11) Veröffentlichungsnummer: **0 355 623 B1**

(12) **EUROPÄISCHE PATENTSCHRIFT**

(45) Veröffentlichungstag der Patentschrift: **03.03.93**

(51) Int. Cl.$^5$: **B29C 59/12**, H01T 19/00

(21) Anmeldenummer: **89114892.6**

(22) Anmeldetag: **11.08.89**

# (54) Vefahren und Vorrichtung zur Oberflächenvorbehandlung eines Formkörpers aus Kunststoff mittels einer elektrischen Koronaentladung.

(30) Priorität: **16.08.88 DE 3827628**

(43) Veröffentlichungstag der Anmeldung:
**28.02.90 Patentblatt 90/09**

(45) Bekanntmachung des Hinweises auf die Patenterteilung:
**03.03.93 Patentblatt 93/09**

(84) Benannte Vertragsstaaten:
**DE**

(56) Entgegenhaltungen:
**EP-A- 0 133 832**
**EP-A- 0 279 371**
**DE-A- 3 208 590**
**FR-A- 2 578 176**
**US-A- 3 274 089**

(73) Patentinhaber: **HOECHST AKTIENGESELL-SCHAFT**
**Postfach 80 03 20**
**W-6230 Frankturt am Main 80(DE)**

(72) Erfinder: **Dinter, Peter**
**Am Wiesenberg 4**
**W-6227 Hallgarten(DE)**
Erfinder: **Bothe, Lothar, Dr.**
**Am Heiligenhaus 9**
**W-6500 Mainz(DE)**
Erfinder: **Gribbin,, John Derek, Dr.**
**Birkenweg 16**
**W-6229 Schlangenbad 2(DE)**

EP 0 355 623 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Oberflächenvorbehandlung eines Formkörpers mittels einer elektrischen Koronaentladung, die in einem Elektrodensystem zwischen Elektroden und einer Gegenelektrode abläuft, zwischen denen der Formkörper hindurchläuft, sowie eine Vorrichtung zur Oberflächenvorbehandlung des Formkörpers.

In vielen Fällen bereitet die normalerweise glatte Oberfläche von Formmaterialien aus Kunststoffen, insbesondere von Folien, insofern Schwierigkeiten, als die Folienbahnen mit extrem gutem Schlupf leicht dazu neigen, beim Aufrollen auf einen Wickel zu teleskopieren. Weitere Schwierigkeiten aufgrund der glatten Oberflächen von Folien bzw. Formmaterialien ergeben sich bei der Veredelung dieser Materialien, zur Steigerung der Adhäsion von Druckfarben, Lacken, Klebern, aufgedampften Metallen und dergleichen. Um diese zu überwinden, gehört es zum Stand der Technik, chemisch-physikalische Oberflächemodifizierungen von Kunststoffen vorzunehmen, insbesondere von Folien. Ein grundsätzliches Verfahren, das nur Veränderungen auf der Kunststoffoberfläche herbeiführt, besteht in einer Vorbehandlung der Kunststoffoberfläche durch eine elektrische Koronaentladung. So erfolgt nach der DE-OS 32 47 795 eine Koronavorbehandlung einer Kunststoff-Folienbahn in der Weise, daß die Folienbahn auf der Oberseite und/oder der Unterseite einer Koronabeaufschlagung unterzogen wird, die unterschiedliche Vorbehandlungsintensitäten ergibt. Hierzu wird die zu behandelnde Folienbahn über eine elektrisch geerdete Walze geführt und die elektrischen Ladung durch Beaufschlagen einer oder beider Seiten der Folienbahn mit einer elektrischen Koronaentladung vorgenommen, die durch das Anlegen eines hochfrequenten Wechselstroms hoher Spannung an eine im Abstand zur Walze angordnete Elektrode erzeugt wird. Die Vorbehandlung erfolgt im allgemeinen in Luft bei Atmosphärendruck.

Die ständig steigenden Forderungen des Marktes nach Produkten mit verbesserten Oberflächeneigenschaften führten auch zur Entwicklung von Verfahren unter Einsatz von chemisch reaktionsfähigen Substanzen, die beispielsweise bestimmte chemische Bindungen in der Oberfläche aufbrechen und dadurch die Oberflächeneigenschaften von Kunststoffen verändern. In der US-PS 3,142,630 ist ein Verfahren zur Vergrößerung der Adhäsion beschrieben, bei dem eine Folienbahn durch eine nicht-ionisierende Flüssigkeit geführt wird und in der Flüssigkeit einer Koronaentladung ausgesetzt wird. Diese Flüssigkeit kann beispielsweise ein Transformatorkühlöl, pflanzliches Öl oder ein sonstiges reines Öl, frei von Verunreinigungen, sein, das weitgehend elektrisch nicht leitend ist.

In der GB-PS 938 325 ist ein Verfahren zur Vorbehandlung von thermoplastischen Folien beschrieben, bei dem eine elektrische Koronaentladung auf der Oberfläche in einer Stickstoffatmosphäre erfolgt. Der Stickstoff wird über Verteilungsleitungen durch hohle Elektrodenleitungen in die Koronaentladungszone eingeleitet.

Bei der Anordnung, die in der US-PS 3,274,089 beschrieben ist, werden durch Verteilungsleitungen organische Verbindungen aus der Gruppe polymerisierbare organische Verbindungen, nicht-polymerisierbare organische Verbindungen mit ersetzbaren Wasserstoffatomen, perhalogenierte Wasserstoff in die Koronaentladungszone eingeleitet, um die Oberfläche von Folienbahnen oder Gegenständen aus Polymeren zu modifizieren.

Diesen bekannten Verfahren ist gemeinsam, reaktionsfähige Gase in den Koronaentladungsbereich zwischen den Elektroden einzuleiten, bzw. die Koronaentladung in einer nicht-leitenden Flüssigkeit ablaufen zu lassen.

Aus der japanischen Patentschrift 17 747/73 ist eine Vorrichtung bekannt, in der eine Folienoberfläche einer Koronaentladung ausgesetzt wird. Die mit dem Generator verbundene Elektrode besteht aus porösen Sintermetallen und aus mehreren Metallnetzen. Die Entladungselektrode ist so geformt, daß sich in ihr zugeführte Flüssigkeit sammelt und gespeichert wird. Durch die angelegte Spannung an die Entladungselektrode wird die gespeicherte Flüssigkeit in die Gasphase übergeführt und tritt aus den porösen Sintermetallen in Form von Gasteilchen aus, die sich unter dem Einfluß der elektrischen Feldlinien der Koronaentladung auf die Folienoberfläche hin bewegen.

Bei den Vorrichtungen und Verfahren, die eine Flüssigkeit als die Entladungselektrode in den Koronaentladungsvorgang mit einbeziehen, ergibt sich die Notwendigkeit, auf spezielle Vorrichtungen zurückgreifen zu müssen, die ein Speichern bzw. Sammeln der Flüssigkeit ermöglichen und darüber hinaus aus einem Material bestehen müssen, das einen Durchtritt der in die Gasphase übergeführten Flüssigkeit in die Koronaentladungszone zuläßt. Wird die vorzubehandelnde Folienbahn durch eine Flüssigkeit hindurchgeführt, in der die Koronaentladung stattfindet, so wird offensichtlich die Transportgeschwindigkeit der Folienbahn durch die Flüssigkeit begrenzt. Erfolgt eine Koronaentladung in reaktiver Atmosphäre auf die Kunststoffoberfläche, so können anschließend verschiedene Schichten zum Veredeln der Kunststoffoberfläche durch weitere Verfahrensmaßnahmen aufgebracht werden. Ein gleichzeitiges Beschichten mit der

Vorbehandlung ist in solch einem Fall nicht möglich. Das gleiche gilt für eine Vorbehandlung von Kunststoffoberflächen, bei der die Koronaentladung auf die Oberfläche in einer Flüssigkeit durchgeführt wird.

In der DE-OS 37 05 482 ist ein Verfahren zur chemischphysikalischen Oberflächenvorbehandlung von Kunststoff-Formkörpern beschrieben, bei dem durch Einbeziehung von in Aerosole zerstäubten Flüssigkeiten in eine Wechselstrom-Coronaentladung gezielte Reaktionsmechanismen auf den behandelten Substraten ausgelöst werden. In der Vorrichtung wird das zu behandelnde Substrat durch einen Entladungsspalt hindurchgeführt, der durch eine auf Erdpotential liegende Walze mit dielektrischem Belag als Gegenelektrode sowie mit Hochspannung beaufschlagten Elektroden gebildet wird und in den aus einer separaten Zerstäubereinrichtung mittels eines Trägergases ein Aerosol geblasen wird. Zur Erzeugung der für die Koronaentladung notwendigen Hochspannung eignen sich die auf dem Markt erhältlichen Korona-Hochspannungsgeneratoren, die üblicherweise Ausgangsspannungen zwischen 5 und 25 kV abgeben. Diese Hochspannungen reichen aus, um eine Koronaentladung in dem etwa 1,5 bis 2 mm breiten Entladungsspalt zu zünden und die bis maximal 500 µm dicken, flexiblen Substrate vorzubehandeln. Mit diesen Generatoren ist jedoch eine Koronavorbehandlung dicker Kunststoffplatten oder Formkörper im Bereich von 1 bis 60 mm nicht möglich. Um in derart großen Entladungsspalten überhaupt eine homogene Koronaentladung zünden zu können, bedarf es extrem hoher Spannungen, die nur speziell konzipierte Generatoren liefern können.

Viele Werkstoffe sind wegen ihrer chemischen Zusammensetzung für den elektrischen Strom nicht oder nur in praktisch nicht meßbarem Umfang leitfähig und gelten daher im allgemeinen als Isolatoren. Die geringe Leitfähigkeit dieser Werkstoffe ist jedoch die Ursache dafür, daß diese an ihrer Oberfläche oftmals sehr hohe elektrostatische Aufladungen ansammeln, die, insbesondere bei flächenhaften Polymererzeugnissen, wie Platten, zu einer Vielzahl von nachteiligen Störungen, bis hin zur Unbrauchbarkeit des Erzeugnisses, führen können und die aus diesem Grund in hohem Maße unerwünscht sind. Die Aufladungen entstehen während der Produktion, Weiterverarbeitung oder dem Gebrauch der Platten überall dort, wo sich Reibungsvorgänge an Kanten, Wendestangen usw. abspielen bzw. wo sich zwei Materialien berühren und anschließend wieder trennen (Trennvorgänge), z.B. an Rollen, und sie können zu Produktionsstörungen, Staubansammlungen, zur Beeinflussung von Meß- und Regelinstrumenten und sogar zu Explosionen führen. Große statische Aufladungen (mehr als 5000 V) können Gas/Luft-Gemische aus verdunstenden Lösungsmitteln entzünden, und kleine statische Aufladungen von weniger als 1000 V können die Oberfläche durch Bildung von Streifen, Staub- und Schmutzansammlungen optisch beeinflussen oder zerstören.

Die Größe der elektrostatischen Aufladung hängt von der elektrischen Leitfähigkeit der Stoffe ab. Gute Leiter sind z.B. Metalle, Ruß, Graphit und Polyene, die ihre Aufladung sofort verlieren, während schlechte Leiter, insbesondere Polymere, ihre Ladung über längere Zeitspannen, nämlich Sekunden bis Minuten und sogar mehrere Tage, aufrechterhalten.

An Kunststoffteilen stört generell deren schlechte Antistatik. Elektrostatisch hochaufgeladene Kunststoffteile bereiten bei nachfolgenden Veredelungsschritten, wie z.B. Beschichten oder Bedrucken, ungeheuere Schwierigkeiten. Vom Bedrucken geschäumter Polystyrolplatten mittels Siebdrucktechnik ist z.B. bekannt, daß die auf der Platte befindlichen elektrostatischen Ladungen die die Siebschablone ausfüllende Druckfarbe aus den Siebmaschen herausschleudern, wodurch ein Drucken unmöglich gemacht wird.

Aufgabe der Erfindung ist es, ein Verfahren und eine Vorrichtung, wie sie eingangs beschrieben sind, so zu gestalten, daß Formkörper in Plattenform mit reaktiven Substanzen in flüssiger Form vorbehandelt werden können, wobei diese Substanzen zugleich auch als spezielle Schichten zum Veredeln der Oberflächen der Formmaterialien auf diese appliziert werden können.

Diese Aufgabe wird erfindungsgemäß durch das eingangs beschriebene Verfahren in der Weise gelöst, daß zur Ausbildung einer homogenen Koronaentladung an die Elektroden eine hochfrequente Wechselspannung von 20 bis 25 kHz und einer Spannungshöhe im Bereich von 20 bis 70 kV angelegt wird und daß gleichzeitig in die Koronaentladungszone mittels eines Luft-oder Gasstroms ein Aerosol, gebildet durch die Zerstäubung einer Flüssigkeit, eingebracht wird.

Die weitere Ausgestaltung des Verfahrens ergibt sich aus den Ansprüchen 2 bis 10.

Eine erfindungsgemäße Vorrichtung zur Oberflächenvorbehandlung eines Formkörpers mittels einer elektrischen Koronaentladung, mit von einem Generator mit einem hochfrequenten Wechselstrom hoher Spannung beaufschlagten Elektrodensystem aus Elektroden und im Abstand dazu angeordneter Gegenelektrode zeichnet sich dadurch aus, daß Elektroden einer ersten Koronaentladungseinrichtung von dem Generator mit einer Spannung zwischen 20 und 70 kV und einer Frequenz von 20 bis 25 kHz beaufschlagt sind und gegenüber der Umgebung durch ein Gehäuse abgeschirmt sind, das über eine Leitung mit einer Zerstäubereinrichtung zum Zerstäuben von Flüssigkeit zu einem schwebfähigen Aerosol verbunden ist, daß die Gegenelektrode mit einer dielektrischen Beschichtung ausgestattet ist, über die eine biegsame Platte als Formkörper aus Kunststoff geführt ist, und daß ein in der Durchsatzmenge regulierbares Gebläse an die

Zerstäubereinrichtung angeschlossen ist und das Trägergas für das Aerosol durch die Zerstäubereinrichtung hindurch in die Koronaentladungseinrichtung fördert.

In Ausgestaltung der Vorrichtung besteht die Zerstäubereinrichtung aus einem piezoelektrisch arbeitenden Ultraschallschwingsystem bzw. weist die Zerstäubereinrichtung mit Schallgeschwindigkeit arbeitende Zweistoff-Zerstäuberdüsen auf.

Die Weiterbildung der Vorrichtung ergibt sich aus den Merkmalen der Ansprüche 14 bis 22.

Durch die Koronaentladung werden Reaktionsmechanismen ausgelöst, die eine chemische Oberflächenmodifizierung des behandelten Formkörpers bewirken. Je nach Art der eingesetzten Aerosolflüssigkeit und des Trägergases für das Aerosol werden auf der behandelten Oberfläche des Formkörpers aktive Zentren in Form funktioneller Gruppen und Radikalen erzeugt, die für nachfolgende Vorgänge Reaktionspartner für die aufgebrachten Substanzen darstellen. Je nach Art der verwendeten Aerosole und Trägergase lassen sich so auf der Oberfläche auch polymerisierbare bzw. vernetzende Schichten in einem einzelnen Verfahrensschritt aufbringen.

Das Funktionieren des erfindungsgemäßen Verfahrens stellt selbst für den Fachmann eine Überraschung dar. Aufgrund der am Elektrodensystem anliegenden hohen Spannungen sind schon unter normalen Arbeitsbedingungen, d.h. wenn sich nur Luft im Elektrodenspalt befindet, Kriechströme und ein Zusammenbrechen der homogenen Koronaentladung nicht auszuschließen. Erst recht sollte diese Gefahr bei dem Einbringen leitfähiger Flüssigkeitsaerosole in die Koronaentladung erwartet werden. Die praktische Ausübung der Erfindung bringt jedoch, entgegen den Befürchtungen, weder Kriechströme noch das Zusammenbrechen der Koronaentladung mit sich.

Einzelheiten des Verfahrens nach der Erfindung sowie von Ausführungsbeispielen der erfindungsgemäßen Vorrichtung werden im folgenden anhand der Zeichnungen näher erläutert.

Es zeigen:

- Figur 1 eine schematische Ansicht einer Vorrichtung zur Oberflächenvorbehandlung von Formkörpern mittels einer elektrischen Koronaentladung,
- Figur 2 eine schematische Ansicht einer Vorrichtung zur Oberflächenvorbehandlung von Formkörpern, die zwei Koronaentladungseinrichtungen umfaßt,
- Figur 3 eine schematische Ansicht einer weiteren Vorrichtung zur Oberflächenvorbehandlung von Formkörpern mit zwei Koronaentladungseinrichtungen, und
- Figur 4 eine andere Ausführungsform der Vorrichtung nach der Erfindung, mit einer Koronaentladungseinrichtung, angeordnet am Austrittsspalt einer Breitschlitz-Luftdüse, zur Oberflächenvorbehandlung eines Formkörpers.

Figur 1 zeigt eine Vorrichtung, bestehend aus einer Walze 10, über die ein zu behandelndes Plattenmaterial 1, z.B. eine flexible, mehrere Millimeter dicke, geschäumte Polystyrolbahn geführt ist, und eine erste Koronaentladungseinrichtung 11, die ein Gehäuse 6 und Elektroden 4 umfaßt, die an einen Generator 5 angeschlossen sind. Die Walze besteht aus einem metallischen Walzenkern 2 mit dielektrischer Beschichtung 3.

Der Walzenkern 2 ist geerdet, so daß die Walze 10 die Gegenelektrode zu den Elektroden 4 der Koronaentladungseinrichtung 11 bildet. Der Abstand zwischen den Elektroden 4 und dem Plattenmaterial 1 beträgt bis zu etwa 2 mm. Die Walze 10 dreht sich in Richtung des Pfeils A. Der Generator 5 beaufschlagt die Elektroden 4 mit einer hochfrequenten Wechselspannung von 20 bis 25 kHz und einer Größe von 20 bis 70 kV. Dadurch wird zwischen der geerdeten Walze 10 und den Elektroden 4 eine elektrische Koronaentladung gezündet, durch deren Feldlinien, die in Figur 1 schematisch angedeutet sind, das Plattenmaterial 1 hindurchgeführt wird. Gegenüber der Umgebung sind die Elektroden 4 durch das Gehäuse 6 abgeschirmt, das über eine Leitung 7, beispielsweise eine starre Rohrleitung oder eine Schlauchleitung oder sonstige flexible Leitung, mit einer Zerstäubereinrichtung 8 verbunden ist. Die Leitung 7 ist an einen Rohrstutzen 12 des Gehäuses 6 einerseits und an einen Rohrstutzen 13 der Zerstäubereinrichtung 8 andererseits angeschlossen. In der Zerstäubereinrichtung 8 erfolgt die Zerstäubung der jeweils einzubringenden Flüssigkeit in ein schwebfähiges Aerosol, das mittels eines von einem in der Durchsatzmenge regulierbaren Gebläses 9 gelieferten Luft- bzw. Trägergasstromes in die Koronaentladungseinrichtung 11 transportiert wird. Bei der Zerstäubereinrichtung 8 handelt es sich um an und für sich bekannte Zweistoff-Zerstäuberdüsen, bei denen die Flüssigkeit durch das mit Schallgeschwindigkeit austretende Trägergas, beispielsweise Luft, in winzige Tröpfchen zerrissen wird, oder um piezoelektrische Ultraschallschwingsysteme, die durch ihre Schwingungen die Flüssigkeit in entsprechende Schwingungen versetzen und sie in winzige Tröpfchen zerreißen. Das Gebläse 9 ist unmittelbar an die Zerstäubereinrichtung 8 angeflanscht. Das in das Gehäuse 6 der Koronaentladungseinrichtung 11 eingebrachte bzw. eingeblasene Aerosol verteilt sich gleichmäßig im Inneren des Gehäuses 6 und wandert entlang den Feldlinien, die von den Elektroden 4 in Richtung Plattenmaterial 1 verlaufen, auf die Plattenoberfläche und wird dort niedergeschlagen. Es ergibt sich

dadurch eine sehr gleichmäßige Benetzung bzw. Beschichtung des Plattenmaterials 1 mit dem Aerosol, wodurch eine sehr gleichmäßige Modifizierung der Oberflächeneigenschaften der Plattenbahn erfolgt.

Die Elektroden 4 weisen als Entladungselektroden eine offene Bauweise auf, d.h. eine Elektrodenform mit hinreichend großem freien Querschnitt zwischen den einzelnen Elektroden. Hierfür haben sich u.a. achsparallel zum Umfang der Walze 10 angeordnete Drahtelektroden gut bewährt. Neben der Oberflächenaktivierung der Plattenbahn können spezielle Beschichtungen auf die Plattenbahn appliziert werden. Hierzu reichen in vielen Fällen extrem dünne Schichten aus, um die Oberflächeneigenschaften, wie zum Beispiel die Antistatik, Abhäsivität, Abriebfestigkeit, Haft- und Gleitreibungsverhalten, Barriereverhalten, Adhäsion, Haftvermittlung, einer Platte in gewünschter Weise zu verändern. Hier bieten sich u.a. zur Herstellung der Aerosole, neben Monomeren, Dispersionen, Lösungen nieder- und/oder hochmolekularer Komponenten und kolloidale Systeme an, die in wäßriger Form, oder in Lösungsmitteln gelöst, eingesetzt werden können.

Die Elektroden 4 der Koronaentladungseinrichtung 11 werden von dem Generator 5 mit einer Wechselspannung zwischen 20 und 70 kV beaufschlagt, wobei die zwischen den Elektroden 4 und der Walze 10 bzw. deren Walzenkern 2 als geerdete Gegenelektrode anliegende Wechselspannung proportional zu der Transportgeschwindigkeit des Plattenmaterials 1 durch die Koronaentladungseinrichtung 11 eingestellt wird. Untersuchungen haben gezeigt, daß mit höherer Transportgeschwindigkeit auch die anliegende Wechselspannung, die der Generator 5 liefert, erhöht werden muß, um eine gleichmäßige Oberflächenmodifikation des Plattenmaterials 1 zu erreichen.

Dieser Zusammenhang zwischen der Transportgeschwindigkeit und der angelegten Generatorspannung ist offensichtlich dadurch gegeben, daß bei höherer Transportgeschwindigkeit des Plattenmaterials 1 zugleich mehr Antistatikum auf die Plattenbahn aufgesprüht werden muß, um eine gleichmäßige Beschichtung der Oberfläche der Plattenbahn zu erhalten. Die Erhöhung der zugeführten Menge an Antistatikum wird durch eine Erhöhung der angelegten Generatorspannung erreicht.

Figur 2 zeigt eine Ausführungsform der Erfindung, die ähnlich zu Figur 1 aufgebaut ist und bei der in Transportrichtung des Plattenmaterials 1 vor der ersten Koronaentladungseinrichtung 11 eine zweite Koronaentladungseinrichtung 15 angeordnet ist. Die Elektroden 14 der zweiten Koronaentladungseinrichtung sind durch ein Gehäuse 16 abgeschirmt, das über eine Leitung 17 mit einem Gasbehälter 18 verbunden ist. Der Generator 5 speist sowohl die Elektroden 4 der ersten Koronaentladungseinrichtung 11 als auch die Elektroden 14 der zweiten Koronaentladungseinrichtung 15. Die übrigen Bauteile dieser Anordnung, wie die Zerstäubereinrichtung 8 und das Gebläse 9, stimmen mit den entsprechenden Bauteilen der Anordnung nach Figur 1 überein und werden daher nicht nochmals beschrieben.

Bei der Vorrichtung nach Figur 2 erfolgt eine kombinierte Vorbehandlung des Plattenmaterials 1 das zunächst im Bereich der zweiten Koronaentladungseinrichtung 15 einer Koronaentladung in reaktiver Atmosphäre ausgesetzt wird, d.h. einer Oberflächenmodifizierung des Plattenmaterials 1 vor der Behandlung durch das Aufbringen eines Aerosols auf die Plattenoberfläche mittels der Koronaentladung in der ersten Koronaentladungseinrichtung 11. Durch die Einspeisung eines Gases aus dem Gasbehälter 18 in die zweite Koronaentladungseinrichtung 15 kann eine abgestimmte Modifizierung bzw. Aktivierung der zu behandelnden Plattenbahn in der Koronaentladungszone der ersten Koronaentladungseinrichtung 11 vorgenommen werden. Als Reaktivierungsgas können beispielsweise Stickstoff oder sonstige stickstoffhaltige gasförmige Verbindungen Anwendung finden.

Der Gasbehälter 18 ist über eine Leitung 17 mit dem Gehäuse 16 der zweiten Koronaentladungseinrichtung 15 verbunden. Üblicherweise wird der Druck des aus dem Gasbehälter 18 ausströmenden Gases durch ein nicht näher dargestelltes Druckreduzierventil geregelt. In Figur 2 ist gezeigt, daß die Entladungselektroden 4 und 14 der beiden Koronaentladungseinrichtungen 11 und 15 gemeinsam von dem einzigen Generator 5 mit Spannung beaufschlagt werden, jedoch ist auch eine Anordnung möglich, bei der die Elektroden jeder Koronaentladungseinrichtung von einem eigenen Generator mit Hochspannung beaufschlagt werden.

Figur 3 zeigt eine Ausführungsform der Erfindung, bei der zwei Vorrichtungen entsprechend der in Figur 1 dargestellten Vorrichtung entlang dem Umfang der Walze 10 angeordnet sind. Die erste Koronaentladungseinrichtung 11 mit der angeschlossenen Zerstäubereinrichtung 8 und dem Gebläse 9 entspricht weitgehend der Vorrichtung, wie sie anhand von Figur 1 beschrieben wurde. In Transportrichtung des Plattenmaterials 1 ist nach der ersten Koronaentladungseinrichtung 11 eine dritte Koronaentladungseinrichtung 19 mit Elektroden 20 vorgesehen, deren Gehäuse 21 die Elektroden 20 umschließt. Das Gehäuse 20 ist über einen Rohrstutzen und eine Leitung 22 mit einem Rohrstutzen einer Zerstäubereinrichtung 23 verbunden, an die ein Gasbehälter 24 angeschlossen ist. In dem Gasbehälter 24 ist ein Trägergas für das Aerosol gespeichert, das in der Zerstäubereinrichtung 23 aus der Behandlungsflüssigkeit erzeugt wird. Als Trägergas kommen, neben Luft und Stickstoff, noch verschiedene Edelgase in Betracht.

Die Elektroden 4 und 20 der ersten und dritten Koronaentladungseinrichtung 11 bzw. 19 sind an den gemeinsamen Generator 5 angeschlossen. Jedoch ist es auch bei dieser Vorrichtung möglich, daß jede der Koronaentladungseinrichtungen über einen getrennten Generator mit Spannung versorgt wird.

Über das Gebläse 9 kann entweder Luft oder ein Gas in die Zerstäubereinrichtung 8 eingeblasen werden, das dann als Trägergas für das jeweilige Aerosol dient, welches in die Koronaentladungseinrichtung 11 eingespeist wird. Mit der gezeigten Vorrichtung können zwei unterschiedliche Flüssigkeiten bzw. deren Aerosole verwendet werden und darüber hinaus auch noch unterschiedliche Trägergase für das jeweilige Aerosol. Diese Vorrichtung läßt durch die Kombination von flüssigen und gasförmigen Reaktionsteilnehmern vielseitige Oberflächenmodifikationen des Plattenmaterials 1 zu. Je nach Art der verwendeten Substanzen lassen sich auf die Plattenbahnoberfläche auch polymerisierbare bzw. vernetzende Schichten durch die Aerosole aufbringen.

Figur 4 zeigt eine abgewandelte Ausführungsform der Vorrichtung, die sich von den Vorrichtungen gemäß den Figuren 1 bis 3 in der Weise unterscheidet, daß das in der Zerstäubereinrichtung erzeugte Aerosol durch das Gebläse 9 über die Leitung 7 in eine Breitschlitz-Luftdüse 25 eingeblasen wird. Die Leitung 7 ist über Rohrstutzen 12 und 13 mit der Luftdüse 25 und der Zerstäubereinrichtung 8 verbunden. An den Düsenlippen 32,32, die den Austrittsspalt 28 der Luftdüse 25 begrenzen, sind hochspannungsführende Entladungselektroden 27 in Gestalt von metallischen Flachprofilen als integrale Bestandteile der Luftdüse 25 angebracht. Der Generator 5 beaufschlagt die Elektroden 27 mit einer hochfrequenten Wechselspannung von 20 bis 25 kHz und 20 bis 70 kV. Das aus der Luftdüse 25 austretende Aerosol gelangt direkt in das Feld der Koronaentladung. Infolge des an den Elektroden 27 anliegenden elektrischen Feldes werden die Aerosoltröpfchen im elektrischen Feld gehalten und an einem unkontrollierten Vagabundieren in die Umgebung gehindert, was sich sowohl in einer nochmals verbesserten Vergleichmäßigung der auf das Substrat aufgebrachten Schichten als auch in einer weitgehend verlustfreien Nutzung der angebotenen Aerosolmenge bemerkbar macht.

Die in Figur 4 schematisch gezeigte Vorrichtung ermöglicht die Vorbehandlung dicker, nicht flexibler, in Formaten vorliegender Platten. Hierbei werden die Platten 34 mittels einer motorisch betriebenen Transportbandeinrichtung, bestehend aus zwei Umlenkwalzen 29, 31 sowie einem endlosen Förderband 33 einer Koronaentladungsstation zugeführt, die aus einer geerdeten metallischen Gegenelektrode 30, im einfachsten Fall einer ebenen Platte, sowie der auf Abstand dazu angeordneten Breitschlitz-Luftdüse 25 besteht, an deren Düsenlippen die hochspannungsführenden Elektroden 27 angebracht sind.

Bezüglich der Ausbildung des endlosen Förderbandes 33 gibt es verschiedene, von der Dicke und dem Isolationsvermögen der zu behandelnden Platten 34 abhängige Möglichkeiten. Bei dünneren Platten muß das Förderband 33 aus dielektrischem Material, wie z.B. Silikongummi oder vergleichbaren Werkstoffen, gefertigt sein. Bei sehr dicken Platten kann das Förderband 33 sogar aus Metall bestehen, wodurch es gleichzeitig die Funktion der geerdeten Gegenelektrode übernehmen kann, so daß die Gegenelektrode 30 in diesem konkreten Fall entfallen kann. Über geeignete Steuereinrichtungen läßt sich eine intermittierende Koronaentladung, abgestimmt auf den Förderzyklus des zu behandelnden Plattenmaterials, einstellen.

Werden elektrisch leitfähige Substanzen für die Aerosolbesprühung eingesetzt, so muß das erfindungsgemäße Verfahren dahingehend geändert werden, daß die anhand der Figuren 1 bis 4 beschriebene Polung der Elektrodensysteme umgekehrt wird. Diese Maßnahme ist absolut zwingend, da ansonsten über das leitfähige Aerosol Strom abfließt und dadurch das für die Koronaentladung notwendige elektrische Feld nicht aufgebaut werden kann.

Anwendbar ist das erfindungsgemäße Verfahren zur Oberflächenmodifizierung praktisch aller heute gängigen Plattenmaterialien. Darunter fallen z.B. Platten, die über Extrusion, Kalandrierung, Gießen, Blockpolymerisation oder Pressen hergestellt werden. Dabei ist es unerheblich, ob die Platten aus homogenem Material bestehen, gegebenenfalls durch Schäumen Vakuolen aufweisen oder sich aus Schichten unterschiedlicher Werkstoffkomponenten zusammensetzen. Ebenso ist das Verfahren nicht nur auf plane Plattengebilde beschränkt, sondern gestattet auch die Behandlung von Profilplatten, die z.B. ein- oder zweiseitig gewellte Oberflächen aufweisen. Ebenso ist es möglich, beide Breitseiten einer Plattenbahn oder einer Platte aufeinanderfolgend einer Koronaentladung in einer Aerosolatmosphäre auszusetzen.

Zur Behandlung eignen sich neben Kunststoffplatten aus Thermoplasten, wie Polyester, Polypropylen, Polyamid, Polystyrol, Hart- und Weich-PVC, Polyethylen, Polyoximethylen, Polyphenylenoxid, Polyvinylidenfluorid, Acryl-Butadien-Styrol-Copolymere, Polymethylmethacrylat und Polycarbonat, auch Platten, die aus mit Papier, Baumwollgeweben, Glasseidengeweben, Glasfasern, Glasfasergeweben verstärkten duroplastischen Phenol-, Harnstoff-, Melamin-, Polyester-, Epoxid- oder Silikonharzen bestehen.

In der nachfolgenden Tabelle sind die mittels des erfindungsgemäßen Verfahrens erzielbaren Effekte, dargestellt an der antistatischen Ausrüstung von diversen Plattenmaterialien, zusammengestellt.

Die als Beispiele angeführten Platten werden mit einer 1 Gew.%igen wäßrigen Lösung von Cholinesterchlorid, einem Antistatikum, das unter dem Produktnamen (R) HB 155 von der Fa. "Antistatik", Peter Urdal (Deutschland) erhältlich ist, in Aerosolform in Kombination mit einer Koronavorbehandlung beaufschlagt (Beispiele 1a - 7a).

In einer weiteren Versuchsserie werden die unbehandelten Platten mit einer 4 Gew.-%igen wäßrigen Lösung eines quarternären Ammoniumsalzes der nachfolgend angegebenen Formel:

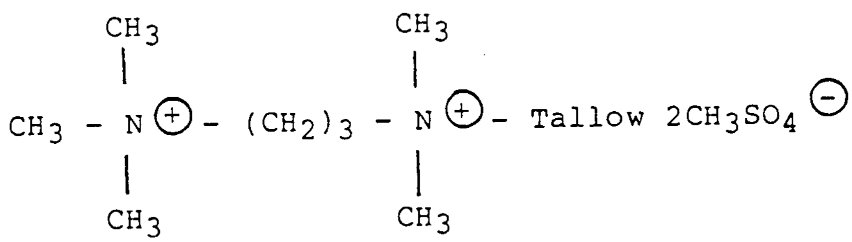

das unter dem Warenzeichen (R) Leomin FA als Antistatikum erhältlich ist, beaufschlagt (Beispiele 1b - 7b).

Benutzt wird hierzu eine Vorrichtung gemäß Figur 4.

Tabelle: Oberflächenwiderstand verschiedener Plattenmaterialien, behandelt mit verschiedenen Antistatika

| | Behandeltes Material | Oberflächenwiderstand (Ω) (a) Cholinesterchlorid | (b) Leomin FA |
|---|---|---|---|
| Beispiel 1a und 1b | geschäumtes Polystyrol<br>Dichte: 0,55 $g/m^3$<br>Dicke: 2 mm | $3 \times 10^7$ | $7 \times 10^7$ |
| Beispiel 2a und 2b | geschäumtes Polystyrol<br>Dichte: 0,43 $g/m^3$<br>Dicke: 6 mm | $3 \times 10^7$ | $7 \times 10^7$ |
| Beispiel 3a und 3b | Polypropylenplatte<br>Hostalen 2250<br>Dicke: 4 mm | $4 \times 10^7$ | $8 \times 10^7$ |
| Beispiel 4a und 4b | Polycarbonatplatte<br>Makrolon<br>Dicke: 4 mm | $6 \times 10^7$ | $10^8$ |
| Beispiel 5a und 5b | Polymethylmethacrylatplatte<br>Plexiglas XT<br>Dicke: 4 mm | $2 \times 10^7$ | $4 \times 10^7$ |
| Beispiel 6a und 6b | Polyvinylchloridplatte<br>Hostalit Z<br>Dicke: 10 mm | $3 \times 10^7$ | $7 \times 10^7$ |
| Beispiel 7a und 7b | Polyesterverbundplatte, gepreßt<br>aus Hostaphanfolien<br>Dicke: 6 mm | $4 \times 10^7$ | $7 \times 10^7$ |

Der Oberflächenwiderstand der unbehandelten Platten lag bei allen Beispielen zwischen $10^{13}$ und $10^{14}$ Ω

**Patentansprüche**

1. Verfahren zur Oberflächenvorbehandlung eines Formkörpers aus Kunststoff mittels einer elektrischen Koronaentladung, die in einem Elektrodensystem zwischen Elektroden und einr Gegenelektrode abläuft, zwischen denen der Formkörper hindurchläuft, dadurch gekennzeichnet, daß zur Ausbildung einer homogenen Koronaentladung an die Elektroden eine hochfrequente Wechselspannung von 20 bis 25 kHz und einer Spannungshöhe im Bereich von 20 bis 70 kV angelegt wird und daß gleichzeitig in die Koronaentladungszone mittels eines Luft-oder Gasstroms ein Aerosol, gebildet durch die Zerstäubung einer Flüssigkeit, eingebracht wird.

2. Verfahren nach Anspruch 1, dadurch gekennzeichnet, daß die Oberfläche des zu behandelnden Formkörpers aus homogenem oder geschäumtem Polymermaterial in einem ersten Schritt durch eine konventionelle Koronaentladung oberflächenaktiviert und in einem zweiten Schritt einer Koronaentladung in einer Aerosol-Atmosphäre ausgesetzt wird und daß zur Ausbildung beider Koronaentladungen jeweils an die Elektroden eine hochfrequente Wechselspannung von 20 bis 25 kHz und einer Spannungshöhe im Bereich von 20 bis 70 kV angelegt wird.

3. Verfahren nach Anspruch 1, dadurch gekennzeichnet, daß der zu behandelnde Formkörper mindestens zwei Koronaentladungen in Folge ausgesetzt wird, wobei jede der Koronaentladungen in jeweils unterschiedlicher Aerosol-Atmosphäre vorgenommen wird.

4. Verfahren nach den Ansprüchen 1 bis 3, dadurch gekennzeichnet, daß das Aerosol durch Trägergase, wie Luft, Gase oder Gasgemische, in die Koronaentladungszone transportiert wird und daß die Trägergase durch Zersetzung im Plasma der Koronaentladung Schichten bilden.

5. Verfahren nach den Ansprüchen 1 bis 4, dadurch gekennzeichnet, daß in die Koronaentladungszone Aerosole von Monomeren, Dispersionen, Lösungen von nieder- und/oder hochmolekularen Polymerkomponenten und kolloidalen Systemen in wäßriger Form oder in Lösungsmitteln gelöst, eingebracht werden.

6. Verfahren nach den Ansprüchen 1 bis 5, dadurch gekennzeichnet, daß ein elektrisch leitfähiges Aerosol in die Koronaentladungszone eingebracht wird.

7. Verfahren nach den Ansprüchen 1 bis 6, dadurch gekennzeichnet, daß das durch Zerstäuben erzeugte Aerosol in eine Luftdüse eingeblasen wird und daß unmittelbar am Austrittsschlitz der Luftdüse die Koronaentladung gezündet wird.

8. Verfahren nach den Ansprüchen 1 bis 7, dadurch gekennzeichnet, daß der zu behandelnde Formkörper, die zum Aerosol zu zerstäubende Flüssigkeit und das dem Aerosoltransport dienende Trägergas auf eine Temperatur zwischen 20° und 95°C erwärmt werden.

9. Verfahren nach Anspruch 1, dadurch gekennzeichnet, daß der Formkörper eine ebene oder profilierte Platte aus homogenem oder geschäumtem Polymermaterial ist, die starr oder biegsam ist und auf der unbeschichteten Außenseite mit einem Aerosol beaufschlagt wird.

10. Verfahren nach Anspruch 1, dadurch gekennzeichnet, daß der Formkörper aus Kunststoff besteht, in dessen Polymermatrix elektrisch leitfähige Partikel eingelagert werden oder der ein- oder beidseitig teil- oder vollflächig mit elektrisch leitfähigen Schichten beschichtet, bedampft oder bedruckt wird.

11. Verfahren nach Anspruch 1, dadurch gekennzeichnet, daß jede der beiden Breitseiten des Formkörpers durch eine Koronaentladung in einer Aerosolatmosphäre oberflächenvorbehandelt wird.

12. Vorrichtung zur Oberflächenvorbehandlung eines Formkörpers mittels einer elektrostatischen Koronaentladung, mit von einem Generator mit einem hochfrequenten Wechselstrom hoher Spannung beaufschlagten Elektrodensystem aus Elektroden und im Abstand dazu angeordneter Gegenelektrode, dadurch gekennzeichnet, daß Elektroden (4) einer ersten Koronaentladungseinrichtung (11) von dem Generator (5) mit einer Spannung zwischen 20 und 70 kV und einer Frequenz von 20 bis 25 kHz beaufschlagt sind und gegenüber der Umgebung durch ein Gehäuse (6) abgeschirmt sind, das über

eine Leitung (7) mit einer Zerstäubereinrichtung (8) zum Zerstäuben von Flüssigkeit zu einem schwebfähigen Aerosol verbunden ist, daß die Gegenelektrode (2) mit einer dielektrischen Beschichtung (3) ausgestattet ist, über die eine biegsame Platte als Formkörper (1) aus Kunststoff geführt ist, und daß ein in der Durchsatzmenge regulierbares Gebläse (9) an die Zerstäubereinrichtung (8) angeschlossen ist und das Trägergas für das Aerosol durch die Zerstäubereinrichtung (8) hindurch in die Koronaentladungseinrichtung (11) fördert.

**13.** Vorrichtung nach Anspruch 12, dadurch gekennzeichnet, daß die Zerstäubereinrichtung (8) aus einem piezoelektrisch arbeitenden Ultraschallschwingsystem besteht.

**14.** Vorrichtung nach Anspruch 12, dadurch gekennzeichnet, daß die Zerstäubereinrichtung (8) mit Schallgeschwindigkeit arbeitende Zweistoff-Zerstäuberdüsen aufweist.

**15.** Vorrichtung nach Anspruch 12, dadurch gekennzeichnet, daß in Transportrichtung des Formkörpers (1) vor der ersten Koronaentladungseinrichtung (11) eine zweite Koronaentladungseinrichtung (15) mit Elektroden (14), die durch ein Gehäuse (16) abgeschirmt sind, angeordnet ist und daß das Gehäuse (16) über eine Leitung (17) mit einem Gasbehälter (18) verbunden ist.

**16.** Vorrichtung nach Anspruch 15, dadurch gekennzeichnet, daß die Elektroden (4, 14) der ersten und zweiten Koronaentladungseinrichtung (11, 15) an den gemeinsamen Generator (5) angeschlossen sind.

**17.** Vorrichtung nach Anspruch 12, dadurch gekennzeichnet, daß in Transportrichtung des Formkörpers (1) nach der ersten Koronaentladungseinrichtung (11) eine dritte Koronaentladungseinrichtung (19) mit Elektroden (20) angeordnet ist, daß ein Gehäuse (21) die Elektroden (20) umschließt und über eine Leitung (22) mit einer Zerstäubereinrichtung (23) verbunden ist, in die ein Trägergas für ein Aerosol von einem angeschlossenen Gasbehälter (24) aus eingespeist wird.

**18.** Vorrichtung nach Anspruch 17, dadurch gekennzeichnet, daß die Elektroden (4, 20) der ersten und dritten Koronaentladungseinrichtung an den gemeinsamen Generator (5) angeschlossen sind.

**19.** Vorrichtung zur Oberflächenvorbehandlung eines Formkörpers mittels einer elektrostatischen Koronaentladung, mit von einem Generator mit einem hochfrequenten Wechselstrom hoher Spannung beaufschlagten Elektrodensystem aus Elektroden und einer dazu im Abstand angeordneten Gegenelektrode, dadurch gekennzeichnet, daß der zu behandelnde Formkörper (34) eine starre plane oder auf einer Oberfläche profilierte Platte ist, die, auf einem um zwei Umlenkwalzen (29, 31) endlos umlaufenden Transportband (33) liegend, zwischen den Elektroden (27) und der Gegenelektrode (30) hindurchtransportiert wird, und daß die Elektroden (27) an den Außenseiten von Düsenlippen (32) im Bereich des Austrittsspalts (28) einer Breitschlitzdüse (25) als integrale Bestandteile angeordnet sind und daß die Breitschlitzdüse (25) über eine flexible oder starre Leitung (7) mit einer Zerstäubereinrichtung (8) zum Zerstäuben von Flüssigkeit zu einem Aerosol verbunden ist.

**20.** Vorrichtung nach Anspruch 19, dadurch gekennzeichnet, daß ein die Durchsatzmenge an Trägergas regelndes Gebläse (9) an die Zerstäubereinrichtung (8) angeschlossen ist und das Trägergas für das Aerosol durch die Zerstäubereinrichtung (8) hindurch in die Breitschlitzdüse (25) fördert.

**21.** Vorrichtung nach Anspruch 19, dadurch gekennzeichnet, daß die Elektroden (27) metallische Flachprofile sind, daß die metallische Gegenelektrode (30) eine geerdete Platte ist und daß das Transportband (33) aus einem dielektrischen Material, wie Silikongummi, besteht.

**22.** Vorrichtung nach Anspruch 19, dadurch gekennzeichnet, daß das Transportband (33) ein Metallband und zugleich die geerdete Gegenelektrode zu den Elektroden (27) ist.

**23.** Vorrichtung nach Anspruch 19, dadurch gekennzeichnet, daß das Aerosol elektrisch leitfähig ist, daß die Elektroden (4; 27) geerdet sind und daß die Gegenelektrode (2; 30) an dem Generator (5) angeschlossen ist und mit einer hochfrequenten Wechselspannung von 20 bis 25 kHz und einer Spannungshöhe von 20 bis 70 kV beaufschlagt ist.

**24.** Formkörper aus einer durch Extrusion, Kalandrierung, Gießen, Blockpolymerisation oder Pressen hergestellten Kunststoffplatte, dadurch gekennzeichnet, daß die Kunststoffplatte aus Polyester, Polypropylen, Polyamid, Polystyrol, Hart- und Weich-Polyvinylchlorid, Polyethylen, Polyoximethylen, Polyphenylenoxid, Polyvinylidenfluorid, Acryl-Butadien-Styrol-Copolymeren, Polymethylmethacrylat oder Polycarbonat besteht und daß die Oberfläche der Kunststoffplatte nach dem Verfahren gemäß einem oder mehreren der Ansprüche 1 bis 10 vorbehandelt ist.

**25.** Formkörper in Gestalt einer Platte, dadurch gekennzeichnet, daß sie aus mit Papier, Baumwollgeweben, Glasseidengeweben, Glasfasern, Glasfasergeweben verstärkten Phenol-, Harnstoff-, Melamin-, Polyester-, Epoxid- oder Silikonharzen besteht und daß die Oberfläche der Platte nach dem Verfahren gemäß einem oder mehreren der Ansprüche 1 bis 11 vorbehandelt ist.

**26.** Formkörper nach Anspruch 24 oder 25, dadurch gekennzeichnet, daß er eine Dicke im Bereich von 1 bis 60 mm aufweist.

**Claims**

**1.** A process for pretreating the surface of a molding of plastic by means of an electrical corona discharge which takes place in an electrode system between electrodes and a counter-electrode, between which the molding passes, wherein a high-frequency alternating current voltage in the range from 20 to 70 kV at a frequency of 20 to 25 kHz is applied to the electrodes to produce a homogeneous corona discharge, and at the same time an aerosol, formed by atomizing a liquid, is introduced into the corona discharge zone by means of an air or gas stream.

**2.** A process as claimed in claim 1, wherein the surface of the molding to be treated, consisting of a homogeneous or expanded polymer material, is activated at the surface by a conventional corona discharge in a first step and, in a second step, is exposed to a corona discharge in an aerosol atmosphere, and, to produce both corona discharges, a high-frequency alternating current voltage in the range from 20 to 70 kV, at a frequency of 20 to 25 kHz, is applied in each case to the electrodes.

**3.** A process as claimed in claim 1, wherein the molding to be treated is exposed to two or more corona discharges in sequence, each of the corona discharges being produced in a different aerosol atmosphere.

**4.** A process as claimed in claims 1 to 3, wherein the aerosol is transported into the corona discharge zone by means of carrier gases, such as air, gases or gas mixtures, and the carrier gases form layers by decomposition in the plasma of the corona discharge.

**5.** A process as claimed in claims 1 to 4, wherein aerosols of monomers, dispersions, solutions of low molecular weight and/or high molecular weight polymer components and colloidal systems in aqueous form or dissolved in solvents are introduced into the corona discharge zone.

**6.** A process as claimed in claims 1 to 5, wherein an electrically conducting aerosol is introduced into the corona discharge zone.

**7.** A process as claimed in claims 1 to 6, wherein the aerosol produced by atomization is blown into an air nozzle, and the corona discharge is struck directly at the outlet slot of the air nozzle.

**8.** A process as claimed in claims 1 to 7, wherein the molding to be treated, the liquid to be atomized to give the aerosol, and the carrier gas used to transport the aerosol are heated to a temperature between 20 and 95 ° C.

**9.** A process as claimed in claim 1, wherein the molding is a flat or profiled sheet of homogeneous or expanded polymer material which is rigid or flexible and which is treated with an aerosol on the uncoated outside.

**10.** A process as claimed in claim 1, wherein the molding consists of plastic in whose polymer matrix electrically conducting particles are embedded or which is provided partially or completely on one or

both sides with electrically conducting layers by coating, vapor deposition or printing.

**11.** A process as claimed in claim 1, wherein each of the two outer surfaces of the molding is pretreated on the surface by a corona discharge in an aerosol atmosphere.

**12.** Apparatus for pretreating the surface of a molding by means of an electrostatic corona discharge, comprising an electrode system, which is subjected to a high-frequency alternating current of high voltage by a generator and consists of electrodes and a counter-electrode arranged a distance away from these wherein electrodes (4) of a first corona discharge means (11) are subjected by the generator (5) to a voltage of between 20 and 70 kV and a frequency of 20 to 25 kHz and are shielded from the environment by a housing (6) which is connected via a line (7) to an atomizing apparatus (8) for atomizing liquid to give a suspendable aerosol, the counter-electrode (2) is equipped with a dielectric coating (3), over which a flexible sheet as the molding (1) made of plastic is conveyed, and a blower (9) whose throughput can be regulated is connected to the atomizing apparatus (8) and conveys the carrier gas for the aerosol through the atomizing apparatus (8) into the corona discharge means (11).

**13.** Apparatus as claimed in claim 12, wherein the atomizing apparatus (8) consists of a piezoelectric ultrasonic vibrator system.

**14.** Apparatus as claimed in claim 12, wherein the atomizing apparatus (8) has two-material atomizer nozzles operating at the speed of sound.

**15.** Apparatus as claimed in claim 12, wherein a second corona discharge means (15), having electrodes (14) which are shielded by a housing (16), is arranged upstream of the first corona discharge means (11) in the transport direction of the molding (1), and the housing (16) is connected to a gas container (18) via a line (17).

**16.** Apparatus as claimed in claim 15, wherein the electrodes (4, 14) of the first and second corona discharge means (11, 15) are connected to the common generator (5).

**17.** Apparatus as claimed in claim 12, wherein a third corona discharge means (19) having electrodes (20) is arranged downstream of the first corona discharge means (11) in the transport direction of the molding (1), and a housing (21) encloses the electrodes (20) and is connected via a line (22) to an atomizing apparatus (23) into which a carrier gas for an aerosol is fed from a connected gas container (24).

**18.** Apparatus as claimed in claim 17, wherein the electrodes (4, 20) of the first and third corona discharge means are connected to the common generator (5).

**19.** Apparatus for pretreating the surface of a molding by means of an electrostatic corona discharge, comprising an electrode system, which is subjected to a high-frequency alternating current of high voltage by a generator and consists of electrodes and a counter-electrode arranged a distance away from these wherein the molding (34) to be treated is a rigid sheet which is flat or profiled on one surface and which is transported between the electrodes (27) and the counter-electrode (30) on a conveyor belt (33) running continuously around two guide rollers (29, 31), and the electrodes (27) are arranged as integral components on the outsides of nozzle lips (32) in the region of the outlet gap (28) of a slot-like nozzle (25), and the slot-like nozzle (25) is connected via a flexible or rigid line (7) to an atomizing apparatus (8) for atomizing liquid to give an aerosol.

**20.** Apparatus as claimed in claim 19, wherein a blower (9) regulating the throughput of carrier gas is connected to the atomizing apparatus (8), and the carrier gas for the aerosol is conveyed through the atomizing apparatus (8) into the slot-like nozzle (25).

**21.** Apparatus as claimed in claim 19, wherein the electrodes (27) are flat metallic sections, the metallic counter-electrode (30) is an earthed plate and the conveyor belt (33) consists of a dielectric material, such as silicone rubber.

**22.** Apparatus as claimed in claim 19, wherein the conveyor belt (33) is a metal belt and at the same time the earthed counter-electrode for the electrodes (27).

**23.** Apparatus as claimed in claim 19, wherein the aerosol is electrically conducting, the electrodes (4; 27) are earthed and the counter-electrode (2; 30) is connected to the generator (5) and is subjected to a high-frequency alternating current voltage of 20 to 70 kV at a frequency of 20 to 25 kHz.

**24.** A molding consisting of a sheet of plastic produced by extrusion, calendering, casting, block polymerization or pressing, wherein the sheet of plastic consists of polyester, polypropylene, polyamide, polystyrene, rigid and plasticized polyvinyl chloride, polyethylene, polyoxymethylene, polyphenylene oxide, polyvinylidene fluoride, acrylo /butadiene/styrene copolymer, polymethyl methacrylate or polycarbonate, and the surface of the sheet of plastic has been pretreated by the process as claimed in one or more of claims 1 to 10.

**25.** A molding in the form of a sheet, which consists of a phenol, urea, melamine, polyester, epoxy or silicone resin reinforced with paper, woven cotton fabrics, woven glass filament fabrics, glass fibers or woven glass fiber fabrics, and the surface of the sheet has been pretreated by a process as claimed in one or more of claims 1 to 11.

**26.** A molding as claimed in claim 24 or 25, which has a thickness in the range from 1 to 60 mm.

**Revendications**

**1.** Procédé de pré-traitement superficiel d'un corps de forme en matière plastique au moyen d'une décharge corona, qui se déroule dans un système d'électrodes entre des électrodes et une contre-électrode, entre lesquelles passe le corps de forme, caractérisé en ce que, pour réaliser une décharge corona homogène, on applique aux électrodes une tension alternative à haute fréquence, de 20 à 25 kHz et d'un niveau de tension de l'ordre de 20 à 70 kV et que, en même temps, on introduit dans la zone de la décharge corona, au moyen d'un courant d'air ou de gaz, un aérosol, formé par la pulvérisation d'un liquide.

**2.** Procédé selon la revendication 1, caractérisé en ce que la surface du corps de forme à traiter, fait d'une matière polymère homogène ou alvéolaire, est activée superficiellement dans une première phase par une décharge corona classique et exposée dans une deuxième phase à une décharge corona dans une atmosphère d'aérosol, et en ce que, pour produire les deux décharges corona, on applique aux électrodes une tension alternative à haute fréquence de 20 à 25 kHz et d'un niveau de tension de l'ordre de 20 à 70 kV.

**3.** Procédé selon la revendication 1, caractérisé en ce que le corps de forme à traiter est exposé à au moins deux décharges corona successives, chacune des décharges corona étant exécutées dans une atmosphère d'aérosol différente.

**4.** Procédé selon les revendications 1 à 3, caractérisé en ce que l'aérosol est transporté dans la zone de décharge corona par des gaz vecteurs tels que l'air, des gaz ou des mélanges de gaz, et en ce que les gaz vecteurs forment des couches par décomposition dans le plasma de la décharge corona.

**5.** Procédé selon les revendications 1 à 4, caractérisé en ce qu'on introduit dans la zone de décharge corona des aérosols de monomères, dispersions, solutions de composants polymères à bas et/ou haut poids moléculaire, et des systèmes colloïdaux sous forme aqueuse ou dissous dans des solvants.

**6.** Procédé selon les revendications 1 à 5, caractérisé en ce qu'on introduit un aérosol électriquement conducteur dans la zone de décharge corona.

**7.** Procédé selon les revendications 1 à 6, caractérisé en ce que l'aérosol produit par pulvérisation est soufflé dans une buse à air et que la décharge corona est mise en oeuvre directement à la sortie de la fente de sortie de la buse à air.

8. Procédé selon les revendications 1 à 7, caractérisé en ce que le corps de forme à traiter, le liquide qu'il s'agit de pulvériser en aérosol, et le gaz vecteur servant pour le transport de l'aérosol, sont chauffés à une température entre 20 et 95 ° C.

9. Procédé selon la revendication 1, caractérisé en ce que le corps de forme est une plaque, plane ou profilée, d'une matière polymère homogène ou alvéolaire, qui est rigide ou flexible, et est soumis à l'action d'un aérosol sur la face extérieure non revêtue.

10. Procédé selon la revendication 1, caractérisé en ce que le corps de forme est constitué de matière plastique, dans la matrice polymère de laquelle sont noyées des particules électriquement conductrices, ou qui est revêtue, par enduction, vaporisation ou impression, sur une ou chacune des deux faces, partiellement ou sur toute son étendue, avec des couches électriquement conductrices.

11. Procédé selon la revendication 1, caractérisé en ce que chacune des grandes faces du corps de forme subit un prétraitement superficiel par une décharge corona dans une atmosphère d'aérosol.

12. Dispositif de prétraitement superficiel d'un corps de forme au moyen d'une décharge électrostatique corona, comprenant un système d'électrodes alimentées par un générateur à courant alternatif à haute fréquence et à haute tension, composé d'électrodes et de contre-électrodes placées à distance l'une de l'autre, caractérisé en ce que les électrodes (4) d'un premier dispositif de décharge corona (11) sont alimentées par le générateur (5) avec une tension entre 20 et 70 kV et une fréquence de 20 à 25 kHz, et sont isolées de l'environnement par un capot (6) qui est raccordé, par une conduite (7), à un dispositif de pulvérisation (8) destiné à pulvériser un liquide en un aérosol pouvant être mis en suspension, en ce que la contre-électrode (2) est munie d'un revêtement diélectrique (3), sur lequel la plaque flexible constituant le corps de forme (1) en matière plastique passe, et en ce qu'un ventilateur (9) à débit réglable est raccordé au dispositif de pulvérisation (8) et refoule le gaz vecteur servant pour l'aérosl dans le dispositif de décharge corona (11) au travers du dispositif de pulvérisation (8).

13. Dispositif selon la revendication 12, caractérisé en ce que le dispositif de pulvérisation (8) est composé d'un système vibratoire à ultrasons actionné par voie piézo-électrique.

14. Dispositif selon la revendication 12, caractérisé en ce que le dispositif de pulvérisation (8) présente des buses de pulvérisation pour deux matières opérant à la vitesse du son.

15. Dispositif selon la revendication 12, caractérisé en ce que, en amont du premier dispositif de décharge corona (11) dans le sens du défilement du corps de forme (1), est agencé un second dispositif de décharge corona (15) muni d'électrodes (14) qui sont abritées par un capot (16) et en ce que le capot (16) est relié à un réservoir de gaz (18) par une conduite (17).

16. Dispositif selon la revendication 15, caractérisé en ce que les électrodes (4, 14) des premier et second dispositifs à décharge corona (11, 15) sont connectées au générateur commun (5).

17. Dispositif selon la revendication 12, caractérisé en ce que, en aval du premier dispositif de décharge corona (11) dans le sens du défilement du corps de forme (1), est agencé un troisième dispositif de décharge corona (19) muni d'électrodes (20), et en ce qu'un capot (21) renferme les électrodes (20) et est relié par une conduite (22) à un dispositif de pulvérisation (23) dans lequel un gaz vecteur pour aérosol est injecté d'un réservoir de gaz (24) qui y est raccordé.

18. Dispositif selon la revendication 17, caractérisé en ce que les électrodes (4, 20) des premier et troisième dispositifs de décharge corona sont connectées à un générateur commun (5).

19. Dispositif pour le pré-traitement superficiel d'un corps de forme au moyen d'une décharge électrostatique corona, comprenant un système d'électrodes qui est alimenté par un générateur à courant alternatif à haute fréquence et à haute tension, et qui est composé d'électrodes et d'une contre-électrode disposée à distance l'une de l'autre, caractérisé en ce que le corps de forme (34) à traiter est une plaque rigide plane ou profilée sur une surface, qui est transportée entre les électrodes (27) et la contre-électrode (30) en reposant sur une bande transporteuse (33) sans fin circulant sur deux rouleaux de renvoi (29, 31) et en ce que les électrodes (27) sont disposées le long des côtés extérieurs des

lèvres (32) de la buse, dans la région de la fente de sortie (28) d'une buse (25) à fente large, et en ce que la buse (25) à fente large est reliée, par une conduite (7) flexible ou rigide, à un dispositif de pulvérisation (8) servant à pulvériser un liquide pour le transformer en un aérosol.

**20.** Dispositif selon la revendication 19, caractérisé en ce qu'un ventilateur (9) qui règle le débit de passage d'un gaz vecteur est raccordé au dispositif de pulvérisation (8), et refoule le gaz vecteur de l'aérosol dans la buse à fente large (25) en lui faisant traverser le dispositif de pulvérisation (8).

**21.** Dispositif selon la revendication 19, caractérisé en ce que les électrodes (27) sont des profilés métalliques plats, en ce que la contre-électrode métallique (30) est une plaque mise à la terre, et en ce que la bande transporteuse (33) est composée d'une matière di-électrique telle qu'un caoutchouc de silicone.

**22.** Dispositif selon la revendication 19, caractérisé en ce que la bande transporteuse (33) est une bande métallique et constitue en même temps la contre-électrode mise à la terre qui coopére avec l'autre électrode (27).

**23.** Dispositif selon la revendication 19, caractérisé en ce que l'aérosol est électriquement conducteur, en ce que les électrodes (4 ; 27) sont mises à la terre et que la contre-électrode (2 ; 30) est connectée au générateur (5), et est alimentée avec une tension alternative à haute fréquence de 20 à 25 kHz et de tension de 20 à 70 kV.

**24.** Corps de forme, constitué par une plaque de matière plastique produite par extrusion, calandrage, coulée, et polymérisation en masse ou compression, caractérisé en ce que la plaque de matière plastique est composée de polyester, polypropylène, polyamide, polystyrène, polychlorure de vinyle dur ou mou, polyéthylène, polyoxyméthylène, polyphénylène-oxyde, polyfluorure de vinylidène, copolymères acryle- butadiène- styrène, polymétracrylate de méthyle ou polycarbonate, et en ce que la surface de la plaque de matière plastique est prétraitée par mise en oeuvre du procédé selon une ou plusieurs des revendications 1 à 10.

**25.** Corps de forme présentant la forme d'une plaque, caractérisé en ce qu'il est composé de résines de phénol-urée, mélamine, polyester, époxyde ou silicone renforcées de papier, tissus de coton, tissus de soie de verre, fibres de verre, tissus de fibres de verre, et en ce que la surface de la plaque est prétraitée par mise en oeuvre du procédé selon une ou plusieurs des revendications 1 à 11.

**26.** Corps de forme selon la revendication 24 ou 25, caractérisé en ce qu'il possède une épaisseur de l'ordre de 1 à 60 mm.

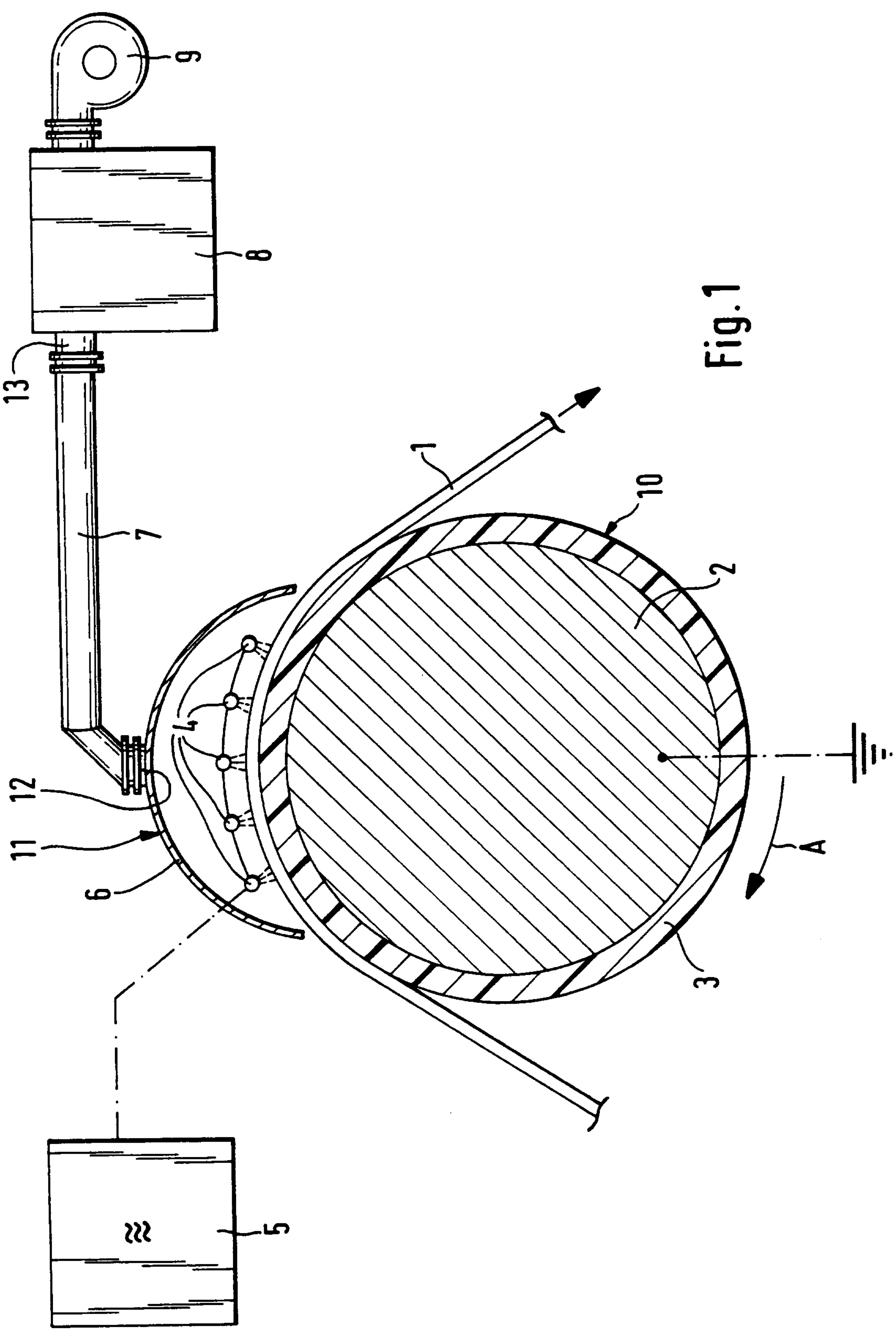


Fig. 1

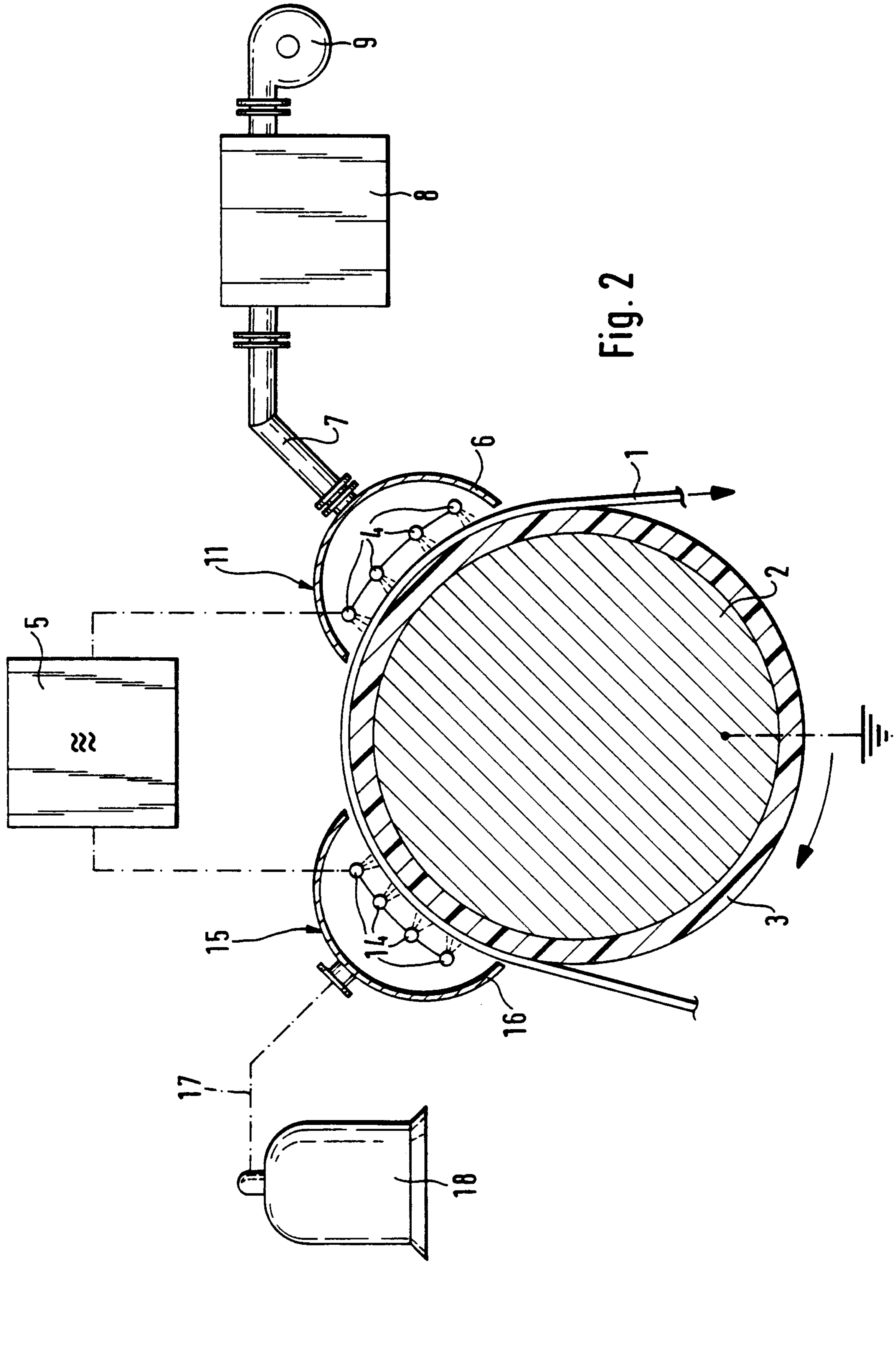


Fig. 2

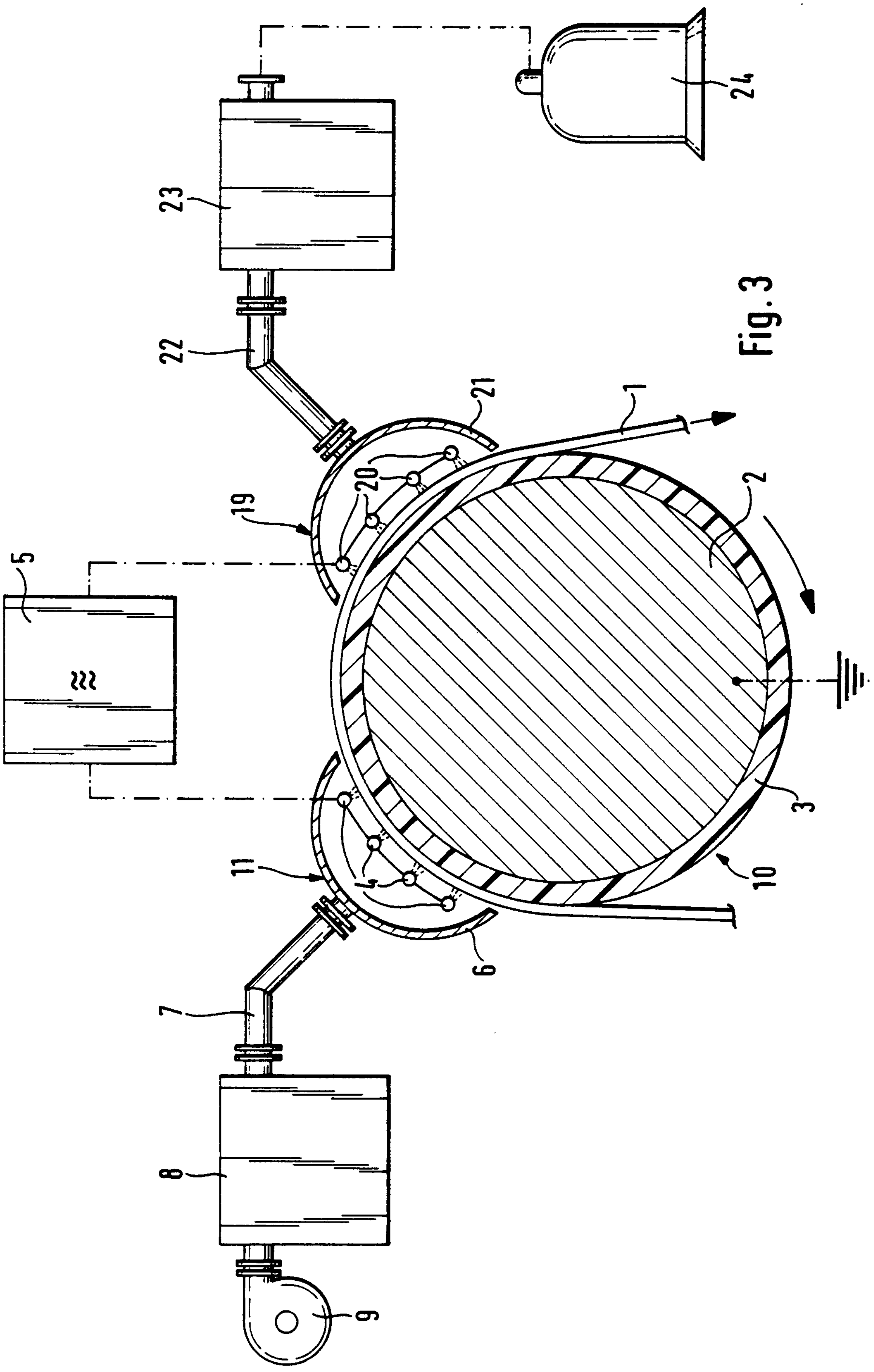


Fig. 3

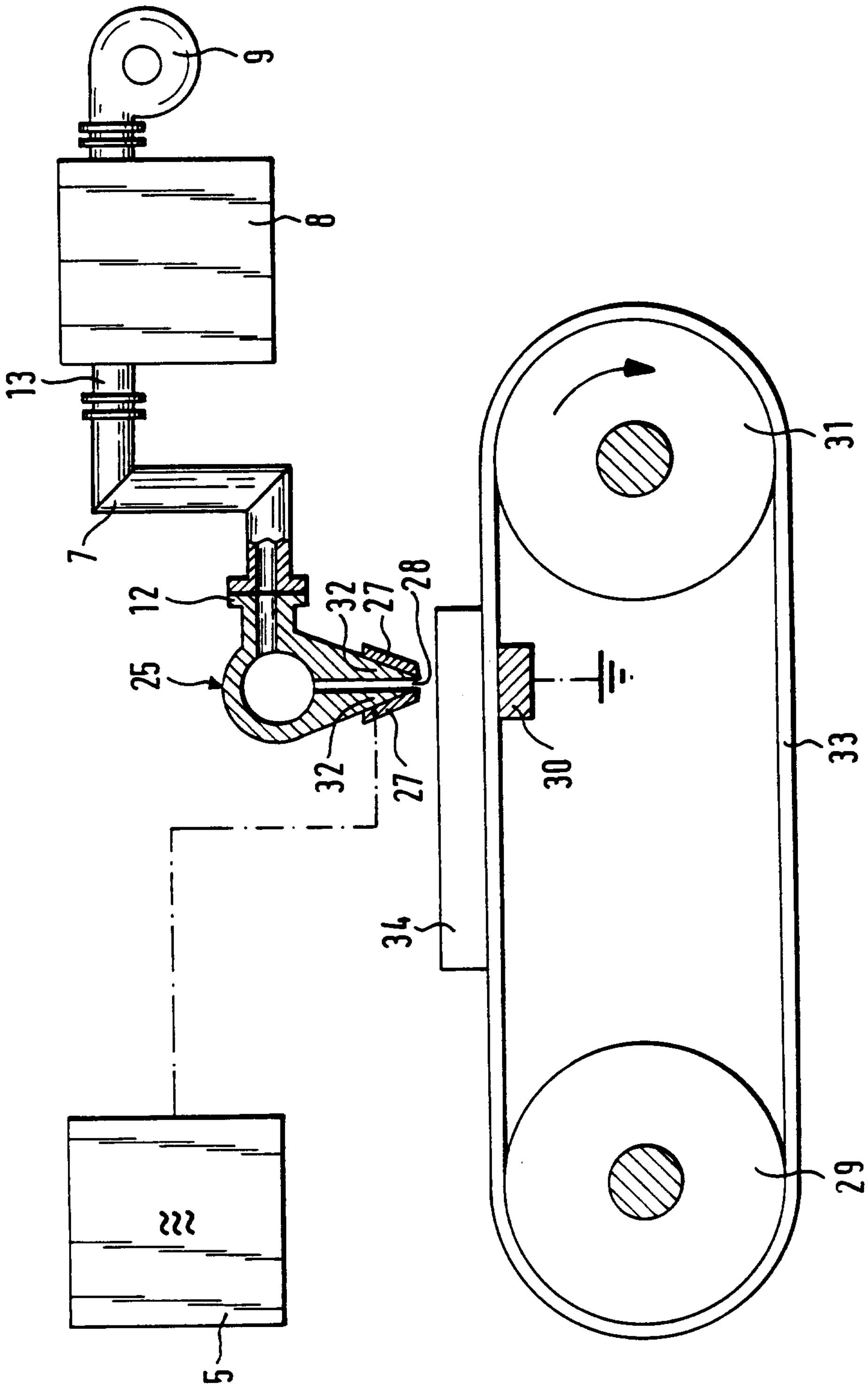


Fig. 4